# EUROPÄISCHE PATENTANMELDUNG

(11) **EP 1 006 383 A1**
(43) Veröffentlichungstag der Anmeldung: **07.06.2000**
(21) Anmeldenummer: 98123117.8
(22) Anmeldetag: 04.12.1998
(51) Int. Cl.: G02B 6/44

(54) **Führungs- und Halteelement**

(71) Anmelder: Schroff GmbH, D-75334 Straubenhardt (DE)
(72) Erfinder: Daub, Elmer, 76327 Pfinztal (DE); Bender, Dieter, 76228 Karlsruhe (DE); Mazura, Paul, 76302 Karlsbad (DE); Rieger, Uwe, 76301 Karlsbad (DE)
(74) Vertreter: Durm, Klaus, Dr.-Ing.

(57) **Zusammenfassung**

An einem Baugruppenträger für Baugruppen der digitalen Nachrichtentechnik ist ein Führungs- und Halteelement für ausgehende und einmündende Lichtwellenleiter angeordnet, welches zweiteilig ausgebildet und aus einer LWL-Führung und einer LWL-Halterung zusammengesetzt ist. Dabei geschieht die Verbindung der beiden Teile durch eine verstellbare Steckverbindung, welche deren Lage gegeneinander zu verändern gestattet.

## Beschreibung

Führungs- und Halteelement für Lichtwellenleiter (LWL) mit einer Rinne, mit einem offenen Rahmen und mit Klemmstiften, zum Anbau an einen Baugruppenträger mit Baugruppen der digitalen Nachrichtentechnik, die durch LWL mit anderen Baugruppen und entfernten Komponenten verbunden sind, wobei der Baugruppenträger mit einem Deckblech, welches ein Raster von Be- und Entlüftungslöchern aufweist, mit zwei Seitenwänden und mit wenigstens einer Tragschiene versehen ist.

Anwendungsgebiet der Erfindung sind Baugruppenträger oder Vernetzungsschränke für Baugruppen, die mit elektrischen, elektronischen und optoelektronischen Komponenten bestückt sind. Übergabesysteme verbinden die Baugruppen untereinander und mit ihrer Umgebung, also mit anderen Signalquellen und/oder anderen Signalsenken.

Die mit Lichtwellenleitern arbeitenden Einrichtungen bedürfen besonderer, zusätzlicher baulicher Maßnahmen, welche bei der Kabelführung von Lichtwellenleitern zu berücksichtigen sind. Für Lichtwellenleiter gibt es kleinste zulässige Krümmungsradien, die keinesfalls unterschritten werden dürfen, damit Funktionsstörungen und Beschädigungen der LWL vermieden werden.

Lichtwellenleiter, die von der Frontseite eines Baugruppenträgers zu seiner Oberseite und von dort seitlich ab oder nach hinten in andere Bereiche geführt werden müssen, bedürfen besonderer, ansetzbarer Führungs- und Halteelemente, welche nicht nur als Kantenschutz und Halterung dienen, sondern vor allem die Einhaltung der Mindestradien beim Abbiegen der LWL gewährleisten. Solche Zusatzelemente sind auf dem Markt, eines davon ist ein Kunststoffspritzgußteil, welches eine Rinne und einen Rahmen zum Einlegen von LWL aufweist und mit Klemmstiften in Be- und Entlüftungslöcher im Deckblech des Baugruppenträgers eindrückbar sind. Nachteilig ist hierbei, daß für Baugruppenträger unterschiedlicher Bauart auch verschiedene dieser Elemente erforderlich sind.

Der Erfindung liegt die Aufgabe zugrunde, ein an einem Baugruppenträger angeordnetes Befestigungselement mit Führungen und Halterungen für in Baugruppen endenden oder von diesen ausgehenden Lichtwellenleiter zu konzipieren, welches nicht nur die Umlenkung der LWL in horizontaler und vertikaler Richtung unter Einhaltung der zulässigen Mindestradien und deren Einlegen in Halterungen gestattet, sondern auch bei verschiedenen Höhenniveaus des Deckbleches verwendbar ist.

Zur Lösung der gestellten Aufgabe wird ausgegangen von einem Führungs- und Halteelement für Lichtwellenleiter (LWL) mit einer Rinne, mit einem offenen Rahmen und mit Klemmstiften, zum Anbau an einen Baugruppenträger mit Baugruppen der digitalen Nachrichtentechnik, die durch LWL mit anderen Baugruppen und entfernten Komponenten verbunden sind, wobei der Baugruppenträger mit einem Deckblech, welches ein Raster von Be- und Entlüftungslöchern aufweist, mit zwei Seitenwänden und mit wenigstens einer Tragschiene versehen ist.

Gelöst wird die Aufgabe durch einen LWL-Führungsteil und einen LWL-Halteteil, die durch eine verstellbare Steckverbindung lösbar miteinander verbunden sind. Die vorgeschlagene Zweiteilung des Führungs- und Halteelementes in Verbindung mit einer verstellbaren Verbindung der beiden Teile erlaubt deren Zusammensetzen in zueinander verschiedenen Stellungen.

In vorteilhafter Ausgestaltung des Führungs- und Halteelementes sind der LWL-Führungsteil und der LWL-Halteteil in zwei zueinander senkrechten Richtungen gegeneinander verstellbar. Die vertikale Verstellbarkeit ermöglicht die Anordnung an Baugruppenträgern mit Deckblechen verschiedener Höhenniveaus und eine horizontale Verstellbarkeit gestattet die seitliche Justierung gegenüber den Baugruppen und den Ausgleich von Toleranzen.

Zweckmäßig besteht die verstellbare Steckverbindung einerseits aus einer am LWL-Halteteil hervorstehenden Steckleiste und andererseits aus wenigstens zwei am LWL-Führungsteil vorgesehenen Steckaufnahmen. Eine derartige Steckverbindung gewährleistet zuverlässige Funktion.

In bevorzugter Ausgestaltung des Führungs- und Halteelementes können die Steckleiste vorn an dem LWL-Halteteil angeformt und die Steckaufnahmen an einer Rückwand des LWL-Führungsteiles vorgesehen sein.

Nach einem weiteren Merkmal der Erfindung weist der LWL-Führungsteil an seiner einen Längsseite wenigstens zwei Sacklöcher auf und an seiner gegenüberliegenden Längsseite stehen wenigstens zwei mit den Sacklöchern fluchtende Steckzapfen hervor. Mit Hilfe dieser Sacklöcher und den Steckzapfen können Führungs- und Halteelemente nebeneinander aufgereiht werden.

Mittels eines Zwischenstückes, welches zwischen zwei benachbarte LWL-Führungsteile einsetzbar ist können die Abstände von in Reihe nebeneinander sitzenden Führungs- und Halteelementen vergrößert werden.

Vorteilhaft wird das Zwischenstück mit zwei seitlichen Sackbohrungen und zwei gegenüberliegenden, seitlichen und angeformten Steckern ausgestattet sein, die jeweils mit den Sacklöchern bzw. den Steckzapfen des LWL-Führungsteiles korrespondieren und mit diesen eine Steckbefestigung bilden.

Das Zwischenstück kann einen rechtwinkelig hochstehenden, angeformten Arm für quer zu dem LWL-Führungsteil verlegte Lichtwellenleiter aufweisen.

Gemäß einem weiteren Merkmal der Erfindung weist der LWL-Führungsteil an seinem Boden zwei einander gegenüberstehende, federnde Klauen auf, an denen gegeneinander gerichtete Rasthaken vorgesehen sind. Mittels dieser Klauen kann der LWL-Führungsteil an einem Hutprofil angeklemmt werden, das beispielsweise an der Seitenwand des Baugruppenträgers vorgesehen ist.

Vorteilhaft trägt der LWL-Führungsteil eine Haltelasche mit zwei gegenüberstehenden, federelastischen Haltelappen, die einen stumpfen Winkel miteinander bilden und zum Körper des LWL-Führungsteiles gerichtet stehen. Diese Maßnahme dient zur Halterung von in die Rinne des LWL-Führungsteiles eingelegte Lichtwellenleiter.

Die Klemmstifte des LWL-Halteteils können Sockel aufweisen, deren Durchmesser denjenigen der Be- und Entlüftungslöcher überschreiten. Dies hat den Vorteil, daß bei auf das Deckblech aufgestecktem LWL-Halteteil nur diejenigen Löcher verstopft sind, in denen die Klemmstifte stecken, wogegen die Zu- und Abluft ungehindert durch die anderen unter dem Boden des LWL-Halteteiles liegenden Be- und Entlüftungslöcher hindurchtreten kann.

Der Gegenstand der Erfindung kann ergänzt werden durch eine an der Seite des Baugruppenträgers angebrachte Befestigungsplatte, die wenigstens zwei Gruppen von je zwei Löchern aufweist, wobei der Abstand zwischen zwei Löchern demjenigen der Sacklöcher des LWL-Führungsteiles entspricht. Diese Befestigungsplatte wird als Abschluß einer Reihe von Führungs- und Halteelementen benutzt und kann mittels der beiden Gruppen von Löchern in zwei verschiedenen Höhen angeschraubt werden.

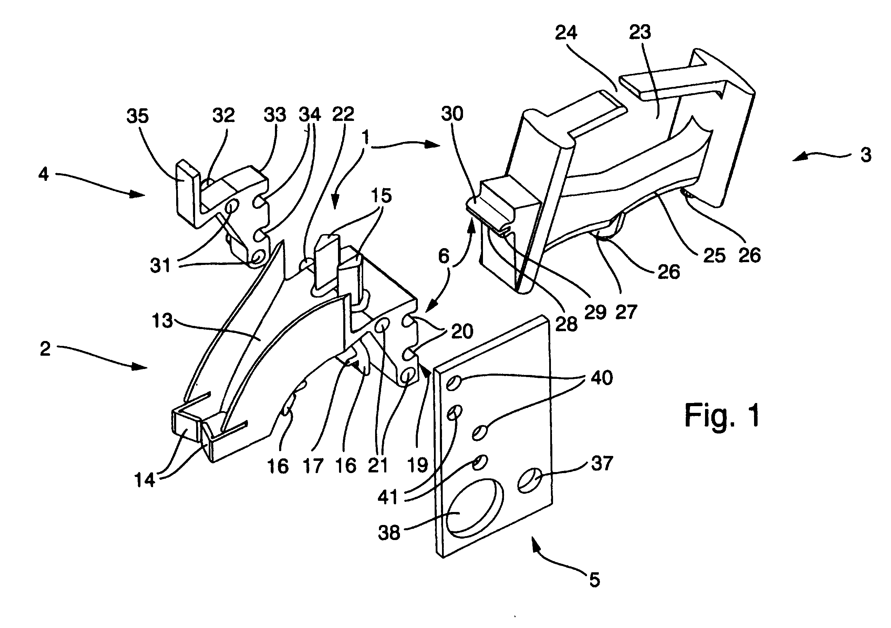

Die Erfindung wird nachstehend an einem Ausführungsbeispiel anhand der beiden Zeichnungsblätter beschrieben und näher erläutert. Dabei zeigen
- Fig. 1: vier zum Führungs- und Halteelement gehörende Teile in explosionsartiger, perspektivischer Darstellung,
- Fig. 2: eine obere Ecke eines Baugruppenträgers mit einem aufgesetzten Führungs- und Halteelement, in Perspektive.

Das Führungs- und Halteelement 1 besteht im wesentlichen aus einem LWL-Führungsteil 2 und einem LWL-Halteteil 3, einem zugehörigen Zwischenstück 4 und einer ergänzenden Befestigungsplatte 5. Der LWL-Führungsteil 2, der LWL-Halteteil 3 und das Zwischenstück 4 bestehen aus Kunststoff, die Befestigungsplatte 5 aus Aluminium.

Der LWL-Führungsteil 2 und der LWL-Halteteil 3 sind durch eine verstellbare Steckverbindung 6 so miteinander verbunden, daß sie bezüglich ihrer Lage zueinander in zwei senkrechten Richtungen gegeneinander verstellbar sind.

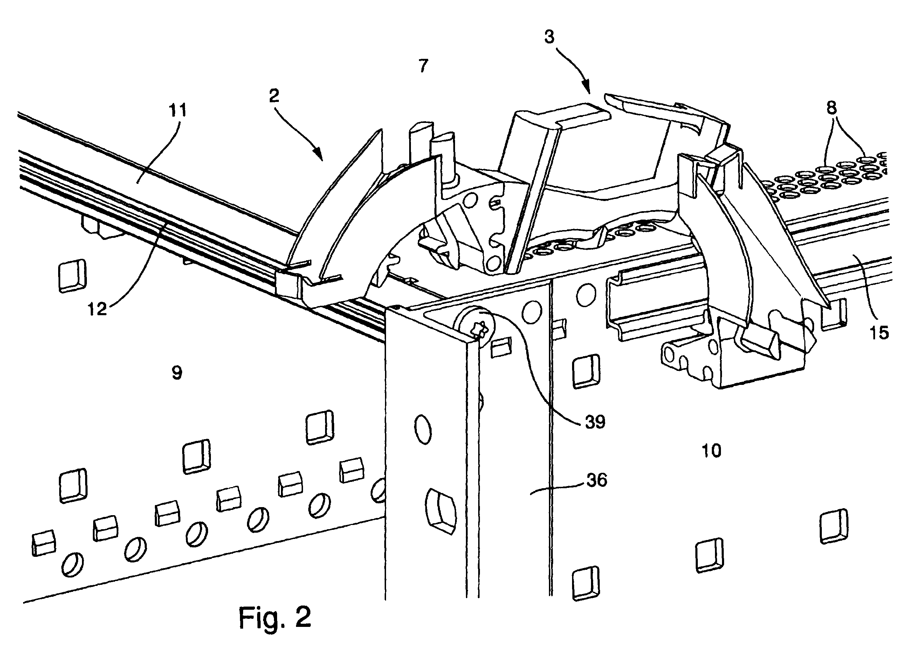

Das Führungs- und Halteelement 1 ist an einem Baugruppenträger angebracht, welcher zur Aufnahme von Baugruppen der digitalen Nachrichtentechnik vorgesehen ist, die mittels Lichtwellenleiter (LWL) miteinander und mit entfernten Komponenten verbunden sind. Ein derartiger, handelsüblicher Baugruppenträger besitzt (Figur 2) ein Deckblech 7, welches ein Raster von kreisförmigen Be- und Entlüftungslöchern 8 aufweist. Zwei Seitenwände 9 und 10 sind durch mehrere Tragschienen miteinander verbunden, von welchen nur die vordere, obere Tragschiene 11 dargestellt ist.

Der LWL-Führungsteil 2 sitzt über der Vorderkante 12 der Tragschiene 9. Eine etwa einem Viertelkreisbogen entsprechend geformte Rinne 13 besitzt zwei parallele Seitenwände, an deren unteren Ende zwei gegenüberstehende, federelastische und angeformte Haltelappen 14 vorgesehen sind, die einen stumpfen Winkel miteinander bilden und zum Körper des LWL-Führungsteiles 2 gerichtet sind.

Die beiden Haltelappen 14 bilden zusammen eine Haltelasche zur Festlegung von Lichtwellenleitern, die in die Rinne 13 gelegt sind. Die Krümmung des Bodens der Rinne 13 gibt den kleinsten Biegeradius der LWL vor, um deren Beschädigung zu verhindern.

Am oberen Ende der Rinne 13 stehen auf deren Boden zwei Führungsstifte 15 mit dreieckigem Grundriß, welche einen in die Finne 13 eingelegten LWL nach drei verschiedenen Richtungen lenken können: in Verlängerung der Rinne 13 in Richtung zur Rückseite des Baugruppenträgers und quer zur Rinne in Richtung parallel zur Tragschiene 11 in beiden Richtungen.

An der Unterseite des LWL-Führungsteiles 2 sind unterhalb der Rinne 13 zwei federnde Klauen 16 angeformt, die einander gegenüberstehen und die im Bereich ihrer Enden gegeneinander gerichtete Rasthaken 17 tragen. Diese Klauen 16 dienen zur Befestigung des LWL-Führungsteiles 2 an einer Hutschiene 18, die an der Seitenwand 10 des Baugruppenträgers vorgesehen ist. Der LWL-Führungsteil 2 besitzt eine abgewinkelte, profilierte Rückwand 19, welche in verschiedenen Höhen zwei parallele Steckaufnahmen 20 aufweist, die rinnenförmig und hinterschnitten ausgebildet sind und Teile der Steckverbindung 6 bilden.

Der LWL-Führungsteil 2 weist an seiner einen Längsseite neben den Steckaufnahmen 20 zwei Sacklöcher 21 auf. An der gegenüberliegenden Längsseite befinden sich zwei Steckzapfen 22, welche mit diesen Sacklöchern 21 fluchten.

Der LWL-Halteteil 3 bildet einen großen, etwa rechteckigen, offenen Rahmen 23, der zum Einlegen und zur Halterung von LWL dient, die parallel zur Tragschiene 11 verlaufen. Diese LWL lassen sich durch einen Schlitz 24 in diesen Rahmen 23 von oben her einführen.

Ein unterer Rahmenschenkel 25 des Rahmens 23 trägt an seiner Unterseite zwei Klemmstifte 26, welche auf Sockeln 27 sitzen, deren Durchmesser denjenigen der Be- und Entlüftungslöcher 8 überschreiten. Diese Klemmstifte 26 sind in Längsrichtung mehrfach geschlitzt, vorn gerundet und dort mit einem Ringwulst versehen, so daß sie sich beim Aufsetzen des LWL-Halteteils 3 auf das Deckblech 7 in zwei Be- und Entlüftungslöcher 8 eindrücken lassen und dann dort durch den Ringwulst lösbar arretiert sind.

Der LWL-Halteteil 3 besitzt an seinem vorderen Rahmenschenkel eine Steckleiste 28, die den zweiten Bestandteil der verstellbaren Steckverbindung 6 bildet. Die Steckleiste 28 ist mit einem Längsschlitz 29 versehen und besitzt beiderseits des Längsschlitzes 29 jeweils einen Wulst 30. Die solchermaßen ausgebildete Steckleiste 28 wird zum Zwecke des Anbringens des LWL-Führungsteiles 2 am LWL-Halteteil 3 in eine der beiden Steckaufnahmen 20 des LWL-Führungsteiles 2 eingedrückt, wodurch die beiden Bestandteile (2 und 3) des Führungs- und Halteelementes 1 lösbar miteinander verbunden sind, wie dies in Figur 2 erkennbar ist. Die Steckleiste 28 ist in der betreffenden Steckaufnahme 20 quer verschieblich, so daß der LWL-Führungsteil 2 gegen den LWL-Halteteil 3 zum Zwecke der Justierung in Seitenrichtung verschoben werden kann. Die übereinander am LWL-Führungsteil 2 angeordneten Steckaufnahmen 20 gestatten bei Baugruppenträgern, deren Deckblech 7 unterschiedliche Einbauhöhen aufweisen, die Anpassung des Führungs- und Halteelementes 1 an die Gegebenheiten aufgrund seiner in Höhenrichtung möglichen Verstellbarkeit.

Das Zwischenstück 4 weist eine Form aus, welche im wesentlichen mit dem Rückteil des LWL-Führungsteiles 2 übereinstimmt und ist daher zwischen zwei benachbarte LWL-Führungsteile einsetzbar. Es ist auf seiner einen Seite mit zwei Sackbohrungen 31, und auf der gegenüberliegenden Seite mit zwei Steckern 32 ausgestattet, die mit den Sacklöchern 21 und den Steckzapfen 22 des LWL-Führungsteiles 2 korrespondieren und mit letzteren eine Steckverbindung bilden, mit deren Hilfe das Zwischenstück 4 beidseitig mit dem LWL-Führungsteil 2 lösbar verbunden werden kann, so daß es als Abstandshalter wirksam wird. Am Rücken 33 befinden sich zwei Aufnahmenuten 34, welche mit den Steckaufnahmen 20 des LWL-Führungsteiles 2 übereinstimmen.

Das Zwischenstück 4 trägt vorn einen rechtwinkelig hochstehenden Arm 35, der angeformt ist und als Lückenfüller zwischen den LWL-Führungsteilen 2 dient.

Die Befestigungsplatte 5 besitzt einen rechteckigen Grundriß und kann am Befestigungsflansch 36 des Baugruppenträgers angeschraubt werden, wozu ein Schraubenloch 37 dient. Eine runde Öffnung 38 nimmt dabei den Kopf 39 einer der Befestigung der Tragschiene 11 an der Seitenwand 10 dienenden Schraube auf. Zwei Gruppen von Löchern 40 und 41 in der Befestigungsplatte 5 haben einen Abstand voneinander, der demjenigen der Sacklöcher 21 des LWL-Führungsteiles 2 entspricht und mit diesen korrespondieren. An der Befestigungsplatte 5 kann ein LWL-Führungsteil 2 seitlich angeschraubt werden.

### Zusammenstellung der Bezugszeichen

- 1: Führungs- und Halteelement
- 2: LWL-Führungsteil
- 3: LWL-Halteteil
- 4: Zwischenstück
- 5: Befestigungsplatte
- 6: Steckverbindung
- 7: Deckblech
- 8: Be- und Entlüftungslöcher
- 9: Seitenwand
- 10: Seitenwand
- 11: Tragschiene
- 12: Vorderkante
- 13: Rinne
- 14: Haltelappen
- 15: Führungsstifte
- 16: Klauen
- 17: Rasthaken
- 18: Hutschiene
- 19: Rückwand
- 20: Steckaufnahme
- 21: Sacklöcher
- 22: Steckzapfen
- 23: Rahmen
- 24: Schlitz
- 25: Rahmenschenkel
- 26: Klemmstift
- 27: Sockel
- 28: Steckleiste
- 29: Längsschlitz
- 30: Wulst
- 31: Sackbohrungen
- 32: Stecker
- 33: Rücken
- 34: Aufnahmenut
- 35: Haltearm
- 36: Befestigungsflansch
- 37: Schraubenloch
- 38: Öffnung
- 39: Kopf
- 40: Löcher
- 41: Löcher

## Patentansprüche

1. Führungs- und Halteelement für Lichtwellenleiter (LWL) mit einer Rinne, mit einem offenen Rahmen und mit Klemmstiften, zum Anbau an einen Baugruppenträger mit Baugruppen der digitalen Nachrichtentechnik, die durch LWL mit anderen Baugruppen und entfernten Komponenten verbunden sind, wobei der Baugruppenträger mit einem Deckblech, welches ein Raster von Be- und Entlüftungslöchern aufweist, mit zwei Seitenwänden und mit wenigstens einer Tragschiene versehen ist, **gekennzeichnet** durch einen LWL-Führungsteil (2) und einen LWL-Halteteil (3), die durch eine verstellbare Steckverbindung (6) lösbar miteinander verbunden sind.

2. Führungs- und Halteelement nach Anspruch 1, dadurch **gekennzeichnet**, daß der LWL-Führungsteil (2) und der LWL-Halteteil (3) in zwei zueinander senkrechten Richtungen gegeneinander verstellbar sind.

3. Führungs- und Halteelement nach Anspruch 1 oder 2, dadurch **gekennzeichnet**, daß die verstellbare Steckverbindung (6) einerseits aus einer am LWL-Halteteil (3) hervorstehenden Steckleiste (28) und andererseits am aus wenigstens zwei am LWL-Führungsteil (2) vorgesehenen Steckaufnahmen (20) besteht.

4. Führungs- und Halteelement nach Anspruch 3, dadurch **gekennzeichnet**, daß die Steckleiste (28) an dem LWL-Halteteil (3) angeformt ist und die Steckaufnahmen (20) an einer Rückwand (19) des LWL-Führungsteiles (2) vorgesehen sind.

5. Führungs- und Halteelement nach einem der Ansprüche 1 bis 4, dadurch **gekennzeichnet**, daß der LWL-Führungsteil (2) an seiner einen Längsseite wenigstens zwei Sacklöcher (21) aufweist und an seiner gegenüberliegenden Längsseite wenigstens zwei mit den Sacklöchern (21) fluchtende Steckzapfen (22) hervorstehen.

6. Führungs- und Halteelement nach einem der Ansprüche 1 bis 5, **gekennzeichnet** durch ein Zwischenstück (4), welches zwischen zwei benachbarte LWL-Führungsteile (2) einsetzbar ist.

7. Führungs- und Halteelement nach Anspruch 6, dadurch **gekennzeichnet**, daß das Zwischenstück (4) mit zwei seitlichen Sackbohrungen (31) und zwei gegenüberliegenden, seitlichen und angeformten Steckern (32) ausgestattet ist, die jeweils mit den Sacklöchern (21) bzw. den Steckzapfen (22) des LWL-Führungsteiles (2) korrespondieren und mit diesen eine Steckbefestigung bilden.

8. Führungs- und Halteelement nach einem der Ansprüche 6 oder 7, dadurch **gekennzeichnet**, daß das Zwischenstück (4) einen rechtwinklig hochstehenden, angeformten Arm (35) trägt.

9. Führungs- und Halteelement nach einem der Ansprüche 1 bis 8, dadurch **gekennzeichnet**, daß der LWL-Führungsteil (2) an seinem Boden zwei einander gegenüberstehende, federnde Klauen (16) aufweist, an denen gegeneinander gerichtete Rasthaken (17) vorgesehen sind.

10. Führungs- und Halteelement nach einem der Ansprüche 1 bis 9, dadurch **gekennzeichnet**, daß der LWL-Führungsteil (2) eine Haltelasche mit zwei gegenüberstehenden, federelastischen Haltelappen (14) trägt, die einen stumpfen Winkel miteinander bilden und zum Körper des LWL-Führungsteiles (2) gerichtet stehen.

11. Führungs- und Halteelement nach einem der Ansprüche 1 bis 10, dadurch **gekennzeichnet**, daß die Klemmstifte (26) des LWL-Halteteils (3) Sockel (27) aufweisen, deren Durchmesser denjenigen der Be- und Entlüftungslöcher (8) überschreiten.

12. Führungs- und Halteelement nach einem der Ansprüche 1 bis 11, **gekennzeichnet** durch eine an seiner Seite angebrachte Befestigungplatte (5), die wenigstens zwei Gruppen von je zwei Löchern (40 und 41) aufweist, wobei der Abstand zwischen zwei Löchern (40 bzw. 41) demjenigen der Sacklöcher (21) des LWL-Führungsteiles (2) entspricht.
